# EUROPÄISCHE PATENTSCHRIFT

(11) **EP 0 772 163 B1**
(45) Veröffentlichungstag und Bekanntmachung des Hinweises auf die Patenterteilung: **27.08.2003**
(21) Anmeldenummer: 96103264.6
(22) Anmeldetag: 02.03.1996
(51) Int. Cl.: G07F 7/08, H04M 17/02

(54) **Verfahren, Schaltungsanordnung und Anlage zum Erkennen eines Missbrauchs von nicht nachladbaren Chipkarten**
Method, circuit and assembly for detecting misuse of non-rechargeable IC-cards
Méthode, circuit et installation pour détecter une utilisation erronée de cartes à circuit intégré non-rechargeables

(30) Priorität: 02.11.1995 DE 19540767
(43) Veröffentlichungstag der Anmeldung: 07.05.1997
(73) Patentinhaber: Deutsche Telekom AG, 53113 Bonn (DE)
(72) Erfinder: Schaefer-Lorinser, Frank, Dr.rer.nat., 64372 Ober-Ramstadt (DE); Schwenk, Jörg, Dr.rer.nat, 64846 Gross-Zimmern (DE)

(56) Entgegenhaltungen:
- EP-A- 0 257 596
- EP-A- 0 429 176

## Beschreibung

Die Erfindung betrifft ein Verfahren zum Erkennen eines Mißbrauchs von nicht nachladbaren Chipkarten in wenigstens einem Endgerät nach Anspruch 1, eine Schaltungsanordnung für ein Endgerät zur Durchführung des Verfahrens nach Anspruch 11 sowie eine Anlage mit wenigstens zwei Endgeräten nach Anspruch 17.

Es sind verschiedene Ausführungsformen von Chipkarten bekannt, die von leistungsfähigen Mikroprozessor-Karten (Smart Card) bis hin zu einfachen Krankenversicherungskarten reichen. Wir betrachten im folgenden hauptsächlich sogenannte Speicherkarten, die Informationen aufbewahren, aber nur begrenzt verarbeiten können. Beispiele sind Guthabenkarten, die eine bestimmte Anzahl von Telefoneinheiten speichern, welche beim Telefonieren entwertet werden. Solche Karten enthalten in der Regel einen physikalisch oder kryptologisch geschützten Zähler, der bei jeder Anwendung der Speicherkarte um eine oder mehrere Telefoneinheiten erniedrigt bzw. erhöht wird. Die Karte wird wertlos, wenn der Zähler einen vorbestimmten Endstand erreicht hat. Obwohl bereits Maßnahmen zum Schutz des Zählers von Chipkarten getroffen worden sind, kann man grundsätzlich nicht ausschließen, daß sie umgangen werden können und der Zähler wieder auf seinen Anfangsstand zurückgesetzt werden kann. Ein noch schwerwiegenderer Mißbrauch liegt vor, wenn z.B. durch Auslesen des Speicherinhalts der Chipkarte identische Kopien (Clones) von dieser Chipkarte hergestellt werden könnten. Bisher ist es nicht möglich, den Einsatz von solchen Kopien an einem Endgerät lokal zu erkennen. Denn ein herkömmlicher Fernsprechapparat verfügt lediglich über einen Zähler, der die insgesamt in dem Telefon verbrauchten Telefoneinheiten zählen kann. Zwar ist es möglich , einen Kartenmißbrauch in einem Endgerät durch eine zentrale Auswertung von einzelnen Chipkartendaten zu erkennen. Doch würde ein dazu notwendiges Zentralsystem hohe Übertragungskosten verursachen und einen großen Speicherbedarf zur Folge haben.

Aus der EP-A-0 429 176 ist ein Verwaltungssystem für vorausbezahlte Karten bekannt. Das Verwaltungssystem enthält einen Speicher, in dem Wertinformationen für jede benutzte Karte gespeichert werden, und eine Bestimmungseinheit. Am Ende eines Gesprächs wird die aktuelle Wertinformation eines Wertzählers in der Chipkarte zu der Bestimmungseinheit übertragen und im Speicher abgelegt. Beim nächsten Gespräch mit dieser Karte wird die Wertinformation des Wertzähler der Karte mit der gespeicherten Wertinformation in der Bestimmungseinheit verglichen, um einen Missbrauch zu erkennen.

Der Erfindung liegt daher die Aufgabe zugrunde, ein Verfahren und eine Schaltungsanordnung zum Erkennen eines Mißbrauchs einer Speicherkarte oder einer Gruppe von Speicherkarten mit der gleichen Identität zu schaffen, die kostengünstig und ohne großen Speicherbedarf realisiert werden können.

Dieses Problem löst die Erfindung mit den Verfahrensschritten des Anspruchs 1, den Merkmalen des Vorrichtungsanspruchs 11 sowie den Merkmalen des Anspruchs 17.

Bei den Chipkarten handelt es sich um nicht nachladbare Speicherkarten, insbesondere um Telefonkarten. Jede Karte oder eine fest vorgegebene Anzahl von Karten besitzt eine eindeutige Identität. Die in jeder Karte gespeicherte Identität sollte gegen Manipulationen geschützt sein und bei jeder Anwendung der Speicherkarte dem Endgerät authentisch mitgeteilt werden.

Erfindungsgemäß wird eine Schaltungsanordnung für ein Endgerät, insbesondere einen Fernsprechapparat, bereitgestellt, der wenigstens zwei erste Speicher aufweist, die jeweils die Identität, d.h. das Kennzeichen einer Speicherkarte oder einer Gruppe von Speicherkarten und die Anzahl der mit diesen Speicherkarten insgesamt in dem Endgerät verbrauchten Werteinheiten, z.B. Telefoneinheiten, aufnehmen können. Die Anzahl der ersten Speicher ist vorbestimmt und kleiner als die Anzahl der verschiedenen Identitäten der sich im Umlauf befindlichen Chipkarten. Ein Zähler dient dazu, die während einer Nutzung des Endgeräts mit der eingesetzten Speicherkarte verbrauchten Werteinheiten zu zählen. Darüber hinaus ist ein erster Detektor oder Komparator vorgesehen, der die Identität der eingesetzten Speicherkarte mit den Identitäten vergleichen kann, die in den ersten Speichern registriert sind. Mit anderen Worten ermittelt der erste Komparator, ob die Identität der in das Endgerät eingesetzten Speicherkarte bereits in einem der ersten Speicher abgelegt ist. Ein Addierer hat die Aufgabe, die von dem Zähler gelieferte Anzahl von Werteinheiten, die mit der eingesetzten Chipkarte verbraucht worden sind, und die in einem ersten Speicher abgelegte Anzahl von Werteinheiten, die mit Speicherkarten, die die gleiche Identität wie die eingesetzte Speicherkarte besitzen, bisher insgesamt in diesem Gerät verbraucht worden sind, zu addieren. Ein zweiter Detektor oder Komparator ist vorgesehen, der den vom Addierer gebildeten Summenwert mit einem vorbestimmten Maximalwert vergleichen kann. Der vorbestimmte maximale Wert entspricht den Werteinheiten, die maximal durch eine legale Benutzung aller im Umlauf befindlichen Speicherkarten gleicher Identität verbraucht werden können. Ein Indikator meldet den Mißbrauch einer Speicherkarte oder einer Gruppe von Speicherkarten gleicher Identität, wenn der vorbestimmte maximale Wert überschritten wird.

Vorteilhafterweise sind in m (mindestens zwei) ersten Speichern die Identitäten und Werteinheiten von höchstens m Speicherkarten abgelegt, mit den an dem Endgerät die m höchsten Werteinheiten verbraucht worden sind. Mit anderen Worten wird in jedem Endgerät eine Hitliste von denjenigen m Speicherkarten angelegt, mit denen an diesem Endgerät am häufigsten telefoniert worden ist. Zweckmäßigerweise speichern die ersten Speicher jeweils die Identitäten und die dazugehörenden verbrauchten Werteinheiten in absteigender Reihenfolge mit Bezug auf die Anzahl verbrauchter Werteinheiten. Mit anderen Worten sind im ersten der ersten Speicher die Identität und die Anzahl von Werteinheiten von Speicherkarten aus der angelegten Hitliste abgelegt, mit denen an dem Endgerät die meisten Werteinheiten verbraucht worden sind, und im letzten ersten Speicher die Identität und die Anzahl von Werteinheiten von Speicherkarten aus der angelegten Hitliste gespeichert, mit denen an dem Endgerät die wenigsten Werteinheiten verbraucht worden sind.

Da die ersten Speicher lediglich die Identität und die Anzahl verbrauchter Werteinheiten für die Speicherkarten speichern können, mit denen die meisten Werteinheiten verbraucht worden sind, kann ein Betrüger seine manipulierten Speicherkarten derart einsetzen, daß die damit während einer Nutzung des Endgeräts verbrauchten Werteinheiten die kleinste Anzahl von verbrauchten Werteinheiten, die in einem der ersten Speicher abgelegt ist, nicht überschreiten. Um einem solchen Mißbrauch vorzubeugen, ist wenigstens ein zweiter Speicher vorgesehen, der die Identität und die Anzahl von verbrauchten Werteinheiten einer eingesetzten Speicherkarte zu einem zufälligen Zeitpunkt aufnehmen kann. Die Anzahl der ersten Speicher und die Anzahl der zweiten Speicher ist vorbestimmt und zusammen kleiner als die Anzahl der verschiedenen Identitäten der sich im Umlauf befindlichen Chipkarten.

Zweckmäßigerweise ist ein dritter Speicher vorgesehen, der die Identität der gerade eingesetzten Speicherkarte und die Anzahl der mit dieser Speicherkarte verbrauchten Werteinheiten vorübergehend speichert.

Es ist durchaus üblich, daß Speicherkarten oder Gruppen von Speicherkarten mit verschiedenen Identitäten ausgegeben werden, die jeweils unterschiedlich viele Werteinheiten speichern. Zu diesem Zweck ist ein vierter Speicher vorgesehen, in dem mehrere vorbestimmte, maximal verfügbare Werteinheiten abgelegt sind, die jeweils einer unterschiedlichen Speicherkartenidentität zugeordnet sind.

Eine Steuereinrichtung sorgt für die Steuerung und Überwachung des Systems.

Das obenbeschriebene Konzept dient dazu, den Mißbrauch einer Speicherkarte oder einer Gruppe von Speicherkarten gleicher Identität sowohl lokal in einem Endgerät als auch in mehreren Endgeräten, in denen diese Chipkarten eingesetzt worden sind, zu erkennen. Dazu können die zu einer Gruppe zusammengefassten Endgeräte die in ihren ersten und oder zweiten Speichern enthaltenen Identitäten und verbrauchten Werteinheiten austauschen und ermitteln, ob die mit den Speicherkarten gleicher Identität an diesen Endgeräten verbrauchten Werteinheiten einen vorgegebenen zulässigen Maximalwert überschritten haben. Diese Aufgabe könnte alternativ auch eine externe, zentrale Steuereinrichtung übernehmen, an die die Endgeräte angeschlossen sind.

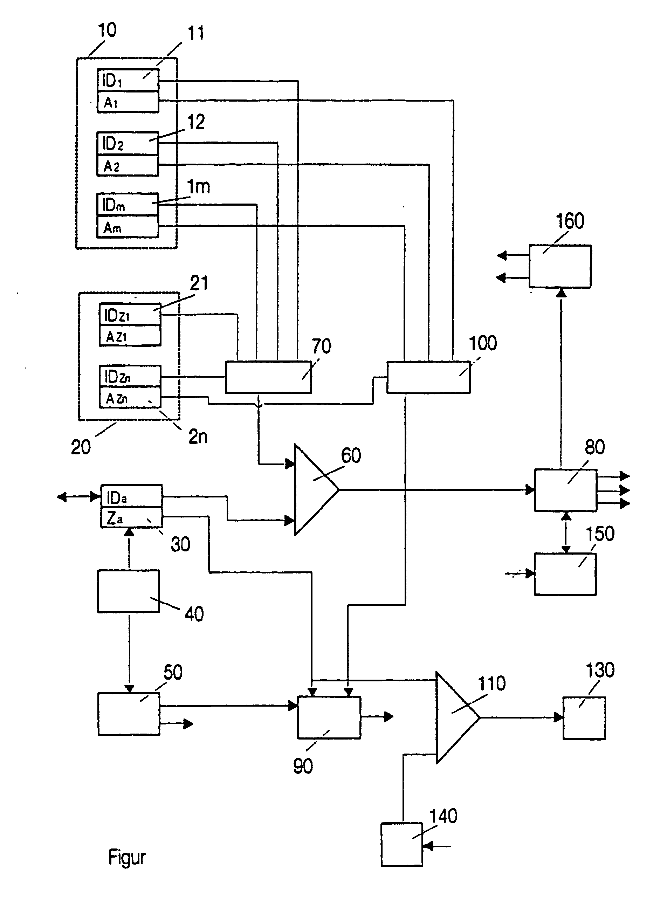

Die Erfindung wird nachfolgend anhand eines Ausführungsbeispiels in Verbindung mit der beiliegenden Zeichnung näher erläutert.

Die Figur zeigt das schematische Blockschaltbild einer beispielhaften Schaltungsanordnung mit der erfindungsgemäßen Speicherkonfiguration 10, 20 und 30, die zum Erkennen des Mißbrauchs einer Chipkarte oder einer Gruppe von Chipkarten gleicher Identität an einem Endgerät dient. Die Schaltungsanordnung kann beispielsweise in'einem Telefon oder jeweils in den zu einer Gruppe zusammengeschlossenen Telefonen für ein Hotel oder einen Club implementiert sein. Die Schaltungsanordnung umfaßt eine Speichergruppe 10 mit m Speichern 11, 12 bis 1m, die je die Identität einer Chipkarte oder einer Gruppe von Chipkarten und die dazu gehörige Anzahl von entwerteten Telefoneinheiten speichern können, die mit den jeweiligen Chipkarten insgesamt an dem Telefon verbraucht worden sind. Bei den Chipkarten handelt es sich um gewöhnliche, nicht nachladbare Speicherkarten, z.B. um Telefonkarten, die je ein Register, das sowohl die Identität bzw. das Kennzeichen der jeweiligen Speicherkarte enthält, und einen Zähler aufweisen. Jeder Zähler zählt im Takt der Gebühreneinheiten vorwärts bis zu einem Maximalwert oder abwärts bis Null. Je nach Zählrichtung zeigt der Zähler einer Speicherkarte die Anzahl verbrauchter bzw. die Anzahl noch nicht entwerteter Telefoneinheiten an. Wie nachfolgend noch ausführlich beschrieben wird, sind in den m Speichern der Speichergruppe 10 nur die Identitäten und die verbrauchten Telefoneinheiten von Speicherkarten abgelegt, mit denen am häufigsten an dem Telefon telefoniert worden ist.
Es kann eine zweite Speichergruppe 20 implementiert sein, die n Speicher 21, ..., 2n umfaßt. In jeden Speicher 21, ..., 2n kann die Identität und die Anzahl von Telefoneinheiten, die mit der eingesetzten Speicherkarte an diesem Telefon verbraucht worden sind, zu einem zufälligen Zeitpunkt aufgenommen werden. Die Identität der eingesetzten Karte und die mit ihr aktuell im Telefon verbrauchten Telefoneinheiten werden nur dann zufällig ausgewählt und in einen beliebigen Speicher der Speichergruppe 20 geschrieben, wenn alle Speicher der Speichergruppe 10 belegt sind und die Anzahl der aktuell entwerteten Telefoneinheiten kleiner ist als die kleinste Anzahl entwerteter Telefoneinheiten, die in einem Speicher der Speichergruppe 10 enthalten ist. Ein weiterer Speicher 30 dient dazu, die Identität und den Zählerstand (dieser entspricht den entwerteten Telefoneinheiten) einer in das Telefon eingesetzten Speicherkarte vorübergehend zu speichern. Ein Gebühren- oder Entwertungstaktgeber 40 erhöht oder erniedrigt regelmäßig den Zähler der eingesetzten Speicherkarte und erhöht den Zählerstand des Zählers 50 der Schaltungsanordnung im Rhythmus des eingestellten Gebührentaktes. An den Eingang eines ersten Komparators 60 ist die Identität IDa der in das Telefon eingesetzten Speicherkarte angelegt. An den zweiten Eingang des Komparators 60 werden beispielsweise über einen Multiplexer 70 und unter Steuerung einer Steuereinrichtung 80 sequentiell die Identitäten ID1, ID2, IDM, IDz1 und IDzn der Speicherkarten angelegt, die in den Speichern der Speichergruppe 10 und der Speichergruppe 20 abgelegt sind. Der Komparator 60 ermittelt vorteilhafterweise vor dem Aufbau eines Gesprächs, ob die Identität IDa der eingesetzten Karte mit einer der Identitäten übereinstimmt, die in einem Speicher der Speichergruppen 10, 20 abgelegt sind. Der Ausgang des Komparators 60 ist bei der Ausführungsform an einen Eingang der Steuereinheit 80 angeschaltet. An den einen Eingang eines Addierers 90 ist der Ausgang des Zählers 50 angeschlossen, an dem die während eines Gesprächs mit der eingesetzten Speicherkarte insgesamt verbrauchten Werteinheiten anliegen. An den zweiten Eingang des Addierers 90 sind über einen Multiplexer 100 sequentiell alle Ausgänge der Speicher der Speichergruppen 10 und 20 angeschlossen. An den Ausgängen liegt jeweils die Anzahl von Telefoneinheiten an, die bisher mit Speicherkarten gleicher Identität verbraucht worden sind. Die Steuereinheit 80 sorgt dafür, daß, wenn eine Übereinstimmung zwischen der Identität der eingesetzten Telefonkarte und der Identität einer der in den Speichern der Speichergruppen 10 und 20 enthaltenen Identitäten (z.B. ID2 in Speicher 12) festgestellt worden ist, die aus dem Zählerstand der eingesetzten Telefonkarte ableitbare Anzahl noch nicht entwerteter Telefoneinheiten und die im Speicher 12 enthaltene Anzahl verbrauchter Telefoneinheiten im Addierer 90 zusammengezählt werden. Der vom Addierer 90 gebildete Summenwert wird an den ersten Eingang eines Komparators 110 angelegt. An den zweiten Eingang des Komparators 110 ist ein maximal vorgegebener Wert angelegt, der einer Anzahl von Telefoneinheiten entspricht, die maximal durch eine legale Benutzung aller im Umlauf befindlichen Speicherkarten mit gleicher Identität verbraucht werden können. Beispielsweise werden von einem Anlagenbetreiber 100 Chipkarten mit der Identität ID1, die je 60 Telefoneinheiten speichern, 100 Speicherkarten mit der Identität ID2, die beispielsweise 50 Telefoneinheiten speichern, und 100 Speicherkarten mit der Identität IDm ausgegeben, die je 70 freie Telefoneinheiten speichern. Die sich ergebenden Maximalwerte von 6000 für ID1, 5000 für ID2 bzw. 7000 für IDm sind in einem Speicher 140 abgelegt. In Abhängigkeit von der Identität der zu überprüfenden Speicherkarte veranlaßt die Steuereinheit 80 den Speicher 140, den zugehörigen Maximalwert an den zweiten Eingang des Komparators 110, im oben genannten Beispiel wäre das der Wert 5000 für Speicherkarten mit der Identität ID2, anzulegen. Wenn der Komparator 110 feststellt, daß der maximale Wert überschritten worden ist, wird eine Mißbrauch-Indikatoreinrichtung 130 aktiviert und das Telefon für Speicherkarten mit der Identität ID2 gesperrt. Ist der Maximalwert nicht überschritten worden, wird das Telefon frei gegeben und es kann ein Gespräch geführt werden. Die während des Gesprächs auf der Speicherkarte ID2 entwerteten Telefoneinheiten werden vom Zähler 50 erfaßt und am Ende des Gesprächs zu den im Speicher 12 abgelegten verbrauchten Telefoneinheiten addiert. Eine Recheneinheit 150 sortiert danach die in den Speichern 11, 12 bis 1m abgelegten Identitäten und die ihnen zugeordneten entwerteten Telefoneinheiten derart, daß im Speicher 11 die Identität der Speicherkarten steht, mit denen die meisten Telefoneinheiten verbraucht worden sind, und im Speicher 1m die Summe verbrauchter Telefoneinheiten und die Identität der Speicherkarten stehen, für die bisher die wenigsten Telefoneinheiten entwertet worden sind.
Es sei nun der Fall angenommen, daß der Komparator 60 keine Übereinstimmung zwischen der Identität IDa der eingesetzten Telefonkarte und den in den Speichern 11, 12 bis 1m enthaltenen Identitäten ermittelt habe. Der Zähler 50 zählt die während eines Gesprächs auf der eingesetzten Speicherkarte entwerteten Telefoneinheiten. Die Recheneinheit 150 kann feststellen, ob die vom Zähler 50 gelieferte Anzahl verbrauchter Telefoneinheiten größer oder kleiner ist als die kleinste im Speicher 1m abgelegte Anzahl von Telefoneinheiten. Ist die vom Zähler 50 erfaßte Anzahl entwerteter Telefoneinheiten größer als die im Speicher 1m enthaltene Anzahl verbrauchter Einheiten, wird der Speicher 1m mit den aktuellen Parametern der eingesetzten Telefonkarte überschrieben. Der Sortierer 160 sorgt anschließend für eine Umsortierung der Speicherinhalte.

Die Speichergruppe 20 erhöht die Leistungsfähigkeit der Schaltungsanordnung; sie wird erst dann benötigt, wenn alle m Speicher der Speichergruppe 10 voll geschrieben sind. So ist es denkbar, daß Betrüger mit manipulierten Speicherkarten gleicher Identität an dem Telefon nur gerade so viele Telefoneinheiten verbrauchen, daß die Identität der eingesetzten Speicherkarte nicht in einen der m Speicher der ersten Speichergruppe 10 aufgenommen werden kann. Ein Zufallsgenerator sorgt deshalb dafür, daß derartige, in das Endgerät eingesetzte Speicherkarten zu zufälligen Zeitpunkten ausgewählt werden. Die Identität und die Anzahl der durch diese Karte verbrauchten Telefoneinheiten wird anschließend in einen der n Speicher der Speichergruppe 20 geschrieben. Die Identität und die Anzahl verbrauchter Telefoneinheiten der Speicherkarte, die in einen der n Speicher der Speichergruppe 20 abgelegt sind, können in einen der m Speicher der ersten Speichergruppe 10 aufgenommen werden, sobald die kleinste, d.h. die in dem Speicher 1m der Speichergruppe 10 abgelegte Anzahl verbrauchter Telefoneinheiten überschritten wird. Auf diese Weise bleibt gewährleistet, daß Speicherkarten, mit denen an dem Telefon sehr häufig und viel telefoniert wird, über einen längeren Zeitraum und nicht nur während eines zufälligen Intervalls registiert werden.

Damit nicht nur der Mißbrauch einer Speicherkarte oder einer Gruppe von Speicherkarten gleicher Identität in dem einen Telefon lokal ermittelt werden kann, können mehrere Endgeräte mit der erfindungsgemäßen Schaltungsanordnung gruppenweise zusammengeschaltet sein und von einer zentralen Einrichtung überwacht werden (nicht dargestellt). Die zentrale Einrichtung ist derart ausgebildet, daß sie die verschiedenen Speicherkarten-Identitäten und die ihnen zugeordnete Anzahl verbrauchter Telefoneinheiten, die in den m Speichern der ersten Speichergruppe 10 und in den n Speicher der zweiten Speichergruppe 20 abgelegt sind abfragen und auswerten kann. Ein Mißbrauch einer Speicherkarte oder einer Gruppe von Speicherkarten gleicher Identität, mit denen an den Gruppentelefonen telefoniert worden ist, wird erkannt, wenn die von der zentralen Einrichtung ermittelte Summe verbrauchter Telefoneinheiten den entsprechenden in dem Speicher 140 abgelegten Maximalwert überschreitet.

Die Funktionsweise der oben beschriebenen beispielhaften Schaltungsanordnung wird nunmehr näher erläutert. Für ein leichteres Verständnis sei angenommen, daß die erste Speichergruppe 10 zwei Speicher 11 und 12 und die zweite Speichergruppe 20 einen Speicher 21 umfaßt. Es sei weiter vorausgesetzt, daß die erfindungsgemäße Schaltungsanordnung nach der Figur in einem Endgerät, z.B. in einem privaten Fernsprechapparat, implementiert ist, an dem ein Chipkarten-Mißbrauch erkannt werden soll. Ferner wird davon ausgegangen, daß der Speicher 11 die Karten-Identität ID1 und 5960 Telefoneinheiten speichert, die mit Speicherkarten der Identität ID1 insgesamt an dem Telefon verbraucht worden sind. Der Speicher 12 enthält die Identität ID2 und 80 Telefoneinheiten, die mit Speicherkarten der Identität ID2 an dem Telefon verbraucht worden sind. Denn wie bereits erwähnt worden ist, werden die Speicherkarten-Identitäten und die Anzahl verbrauchter Telefoneinheiten mit Bezug auf die Anzahl von verbrauchten Telefoneinheiten in absteigender Reihenfolge in den Speichern 11 und 12 der Speichergruppe 10 abgelegt. Das Telefon kann beispielsweise ein Klubtelefon oder ein in einem Hotelzimmer angeschlossenes Telefon sein. Der Hotelbesitzer habe beispielsweise 100 Speicherkarten mit der Identität ID1 und jeweils 60 verfügbaren Telefoneinheiten, 100 Speicherkarten mit der Identität ID2 und jeweils 50 verfügbaren Telefoneinheiten und 100 Speicherkarten mit der Identität ID3 und je 70 freien Telefoneinheiten ausgegeben. Dies bedeutet, daß mit den Speicherkarten der Identität ID₁ insgesamt 6000 Einheiten, mit den Speicherkarten der Identität ID₂ 5000 Einheiten und mit den Speicherkarten der Identität ID₃ 7000 Einheiten verbraucht werden können. Diese drei Maximalwerte sind in dem Speicher 140 abgelegt.

Es sei nun der Fall angenommen, daß ein Hotelgast eine Speicherkarte mit der Identität ID₁ und einer Wertigkeit 60 besitzt. Um an dem Telefon eine Gesprächsverbindung aufbauen zu können, muß er seine Speicherkarte in das Telefon einführen. Der Fernsprechapparat verfügt über einen Kartenleser, der sowohl die Identität als auch den Zählerstand der Speicherkarte lesen kann. Nachdem die Karte in den Fernsprechapparat eingeführt worden ist, werden die Identität ID₁ und der aktuelle Zählerstand der Karte (entweder die Anzahl bisher verbrauchter oder noch nicht entwerteter Telefoneinheiten) in den Speicher 30 eingeschrieben. Aus dem Zählerstand Zₐ des Zählers der Speicherkarte ID₁ erkennt die Schaltungsanordnung, wie viele Telefoneinheiten auf der Speicherkarte noch verfügbar sind. Im vorliegenden Fall sei angenommen, daß es sich um eine manipulierte Speicherkarte mit der Identität ID₁ handelt, die noch über 60 Telefoneinheiten verfügt. Zweckmäßigerweise vergleicht der Komparator 60 vor der Gesprächseinleitung der Reihe nach die Identität IDa der aktuell eingesetzten Speicherkarte mit den in den Speichern 11 und 12 abgelegten Identitäten. Im vorliegenden Fall liefert der Komparator 60 ein positives Vergleichsergebnis, d.h. die Identität IDa der in dem Fernsprechapparat eingesetzten Speicherkarte entspricht der Identität ID1, die im Speicher 11 abgelegt ist. Unter Ansprechen auf dieses positive Ergebnis bewirkt die Steuereinheit 80, daß der Zählerstand Za der eingesetzten Speicherkarte, das sind in diesem Fall 60 Telefoneinheiten und die bisher mit den Speicherkarten der Identität ID₁ verbrauchten 5960 Telefoneinheiten, die im Speicher 11 vorliegen, in dem Addierer 90 addiert werden. Der vom Addierer 90 gelieferte Summenwert von 6020 verbrauchten Telefoneinheiten wird an den Eingang des Komparators 110 angelegt. An den zweiten Eingang des Komparators 110 wird der Maximalwert von 6000 aus dem Speicher 140 angelegt. Bei dem Maximalwert 6000 handelt es sich um den Wert, der maximal durch eine legale Benutzung aller im Umlauf befindlichen Speicherkarten mit der Identität ID₁ erreicht werden kann. Der Komparator 110 stellt fest, daß der maximal zulässige Wert von 6000 verfügbaren Telefoneinheiten überschritten worden ist. Daraufhin wird die Mißbrauch-Meldeeinrichtung 130 aktiviert, und es können nun geeignete Maßnahmen ergriffen werden. Zweckmäßigerweise wird nunmehr der Fernsprechapparat für den Einsatz von Speicherkarten mit der Identität ID₁ gesperrt und die Identität ID₁ an ein zentrales System weitergegeben.

Ausgangspunkt sei wiederum das erste Beispiel. Allerdings weist die in das Fernsprechgerät eingesetzte Speicherkarte mit der Identität ID₁ nur noch 20 verfügbare Telefoneinheiten aufweist. Der Komparator 110 stellt daher fest, daß der Maximalwert von 6000 nicht überschritten werden kann, und das Telefon wird nicht gesperrt. Während des Gesprächs zählt der Zähler 50 die mit der eingesetzten Speicherkarte verbrauchten Telefoneinheiten. Nach Beendigung des Gesprächs werden die gezählten Telefoneinheiten in dem Addierer 90 zu den im Speicher 11 abgelegten 5960 Telefoneinheiten addiert. Die erhaltene Summe wird in den Speicher 11 geschrieben. Der Sortierer 160 ordnet die Speicherinhalte nicht neu um, da nach wie vor der Speicher 11 die größte und der Speicher 12 die kleinste Anzahl verbrauchter Telefoneinheiten enthalten.

Im folgenden Beispiel sei angenommen, daß eine Speicherkarte mit der Identität ID₃ in den Fernsprechapparat eingesetzt wird. Der Komparator 60 stellt keine Übereinstimmung zwischen den in den Speichern 11 und 12 abgelegten Identitäten und der Identität ID₃ fest. Während des Gesprächs wird der Zähler der eingesetzten Speicherkarte ID₃ und der Zähler 50 des Fernsprechapparats durch den Gebührentaktgeber 40 getaktet. Am Ende des Gesprächs liegen im Zähler 50 die verbrauchten Telefoneinheiten vor. Die vom Zähler 50 gezählten Telefoneinheiten werden zusammen mit den in den Speichern 11 und 12 abgelegten Telefoneinheiten, die von den Speicherkarten mit der Identität ID₁ bzw. ID₂ verbraucht worden sind, in der Recheneinheit 150 überprüft, ob die von der Speicherkarte ID₃ gerade verbrauchten Telefoneinheiten einen Wert überschritten haben, der größer ist als die kleinste Anzahl verbrauchter Einheiten (80), die der Speicher 12 enthält. Stellt sich heraus, daß die mit der eingesetzten Speicherkarte ID₃ verbrauchten Telefoneinheiten einen Wert A2 überschritten haben, wird dieser Wert zusammen mit der Identität ID₃ in den Speicher 12 geschrieben. Ergibt die Berechnung der Recheneinheit 150, daß die Anzahl der mit der eingesetzten Speicherkarte ID₃ verbrauchten Telefoneinheiten kleiner ist als der Wert 80 (das ist hier der Fall), wird der Zufallsgenerator aktiviert, der zu einem zufälligen Zeitpunkt bestimmt, daß die Identität ID₃ und die mit dieser Karte verbrauchten Telefoneinheiten in den Speicher 21 der zweiten Speichergruppe 20 abgelegt werden sollen.

Es sei nun angenommen, daß die in dem Speicher 30 abgelegte Identität ID₃ und die während der Benutzung des Fernsprechapparates entwerteten Telefoneinheiten in den Speicher 21 der Speichergruppe 20 eingelesen worden sind.

Ein Telefongast besitze ebenfalls eine Speicherkarte mit der Identität ID₃ und wünscht, an demselben Fernsprechapparat zu telefonieren. In diesem Fall stellt der Komparator 60 fest, daß die Identität ID₃ der eingesetzten Speicherkarte bereits in dem Speicher 21 der Speichergruppe 20 enthalten ist. Die Steuereinheit 80 bewirkt vor dem Verbindungsaufbau, daß die Anzahl Za noch verfügbarer Telefoneinheiten und die Anzahl verbrauchter Telefoneinheiten, die im Speicher 21 abgelegt sind, in dem Addierer 90 addiert werden. Der den Speicherkarten mit der Identität ID₃ zugeordnete Maximalwert von 7000 wird an den ersten Eingang des Komparators 110 angelegt. An den zweiten Eingang des Komparators 110 wird der vom Addierer 90 gebildete Summenwert angelegt. Ist der erhaltene Summenwert kleiner als der Maximalwert von 7000 (das ist hier der Fall), sind mehrere Verarbeitungsmöglichkeiten gegeben:
1. Der Summenwert wird in der Recheneinheit 150 oder in einer separaten Recheneinrichtung mit den Inhalten der Speicher 11 und 12 verglichen. Überschreitet der Summenwert die im Speicher 12 abgelegte kleinste Anzahl verbrauchter Telefoneinheiten, wird der Speicher 12 durch diesen Wert überschrieben. Eine Neuordnung der Speicherinhalte durch den Sortierer 160 erfolgt nur, wenn der Summenwert größer ist als die im Speicher 11 abgelegte Anzahl verbrauchter Telefoneinheiten.
2. Der Inhalt des Speichers 21 wird durch den Summenwert überschrieben oder zu einem zufälligen Zeitpunkt gelöscht, wenn der Summenwert kleiner ist als die kleinste in dem Speicher 12 abgelegte Anzahl verbrauchter Telefoneinheiten.

Dieses geschilderte Verfahren ist auch anwendbar, wenn ein Kartenmißbrauch in mehreren Endgeräten erkannt werden soll, die gruppenweise zusammengefaßt sein können.

## Patentansprüche

1. Verfahren zum Erkennen eines Mißbrauchs von nicht nachladbaren Chipkarten in wenigstens einem Endgerät, das wenigstens zwei erste Speicher (10, 11, 12) enthält, die je die Identität (ID) einer Chipkarte oder einer Gruppe von Chipkarten, wobei die Anzahl (m) der ersten Speicher (10, 11, 12) vorbestimmt und kleiner als die Anzahl der verschiedenen Identitäten der sich im Umlauf befindlichen Chipkarten ist, und die Anzahl (A) der mit diesen Chipkarten verbrauchten Werteinheiten speichern können, mit folgenden Schritten:
a) Einsetzen einer Chipkarte in das Endgerät, das die Identität (IDa) und den Zählerstand der eingesetzten Chipkarte abfragen kann,
b) Ermitteln, ob die Identität (IDa) der eingesetzten Chipkarte bereits in einem der ersten Speicher (11, 12) abgelegt ist,
c) Zählen der während der Nutzung des Endgeräts verbrauchten Werteinheiten,
d) ist die Identität (IDa) der eingesetzten Chipkarte in keinem der ersten Speicher (11, 12) registriert, werden die Identität und die in Schritt c) gezählten Werteinheiten in einen der ersten Speicher geladen, wenn wenigstens ein erster Speicher nicht beschrieben ist, oder wenn die Anzahl der in Schritt c) gezählten Werteinheiten größer ist als die kleinste Anzahl verbrauchter Werteinheiten, die in einem der ersten Speicher enthalten ist,
e) ist die Identität der eingesetzten Chipkarte in einem der ersten Speicher registriert, werden die in diesem Speicher abgelegte Anzahl von verbrauchten Werteinheiten und die in Schritt c) gezählten Werteinheiten addiert, und dieser Summenwert wird mit einem vorbestimmten maximalen Wert verglichen, und
f) es wird ein Mißbrauch einer Chipkarte oder einer Gruppe von Chipkarten mit der gleichen Identität angezeigt, wenn die in c) ermittelte Anzahl von Werteinheiten oder der in e) gebildete Summenwert den vorbestimmten maximalen Wert überschreitet.

2. Verfahren zum Erkennen eines Kartenmißbrauchs nach Anspruch 1,
**dadurch gekennzeichnet, daß** der Schritt d) durch den Schritt d') ersetzt wird:
d') die Identität der eingesetzten Chipkarte und die in Schritt c) gezählten Werteinheiten werden in den ersten Speicher (1m) geschrieben, der die kleinste Anzahl von verbrauchten Werteinheiten enthält, und die in den ersten Speichern (10, 11, 12...1m) abgelegten Kartenidentitäten und den dazugehörenden verbrauchten Werteinheiten werden mit Bezug auf die Anzahl verbrauchter Werteinheiten in absteigender Reihenfolge neu geordnet.

3. Verfahren zum Erkennen eines Kartenmißbrauchs nach Anspruch 1,
**dadurch gekennzeichnet,**
**daß** in jedem Endgerät wenigstens ein zweiter Speicher (20, 21...2n) angeordnet ist, wobei die Anzahl (m) der ersten Speicher (10, 11, 12) und die Anzahl (n) der zweiten Speicher (20, 21...2n) vorbestimmt und zusammen kleiner als die Anzahl der verschiedenen Identitäten der sich im Umlauf befindlichen Chipkarten ist,
**daß** der Schritt b) ersetzt wird durch die Schritte
b1) Ermitteln, ob die Identität der eingesetzten Chipkarte in einem der ersten oder zweiten Speicher (10, 20) enthalten ist,
b2) Ermitteln, ob alle ersten Speicher (11...1m) beschrieben sind,
**daß** der Schritt d) ersetzt wird durch den Schritt
d1) ist die Identität der eingesetzten Chipkarte in keinem der ersten oder zweiten Speicher enthalten, sind alle ersten Speicher beschrieben und ist die Anzahl der in Schritt c) gezählten verbrauchten Werteinheiten kleiner oder gleich der kleinsten in einem der ersten Speicher gespeicherten Anzahl verbrauchter Werteinheiten, wird zufällig bestimmt, ob die Identität und die gezählten Werteinheiten der eingesetzten Chipkarte in den zweiten Speicher (20) eingeschrieben werden sollen, und daß der Schritt e) ersetzt wird durch den Schritt
e1) ist die Identität der eingesetzten Chipkarte in einem der ersten oder zweiten Speicher enthalten, werden die in diesem Speicher abgelegte Anzahl von verbrauchten Werteinheiten addiert, und dieser Summenwert wird mit dem vorbestimmten maximalen Wert verglichen.

4. Verfahren zum Erkennen eines Kartenmißbrauchs nach Anspruch 3,
**dadurch gekennzeichnet, daß** auf Schritt e1) Schritt e2) folgt:
e2) die Identität einer Chipkarte oder einer Gruppe von Chipkarten und die Anzahl von mit diesen Chipkarten verbrauchten Werteinheiten, die in einem der zweiten Speicher registriert sind, werden in einen der ersten Speicher geschrieben, wenn der in Schritt e1) gebildete Summenwert größer ist als die kleinste Anzahl verbrauchter Werteinheiten, die in einem der ersten Speicher abgelegt sind.

5. Verfahren zum Erkennen eines Kartenmißbrauchs nach einem der Ansprüche 1 bis 4,
**dadurch gekennzeichnet,**
**daß** die Kartenidentität und die Anzahl der mit dieser Chipkarte verbrauchten Werteinheiten, die in einem der ersten Speicher abgelegt sind, gelöscht werden, wenn während einer vorbestimmten Zeitspanne die Anzahl der verbrauchten Werteinheiten nicht geändert worden ist.

6. Verfahren zum Erkennen eines Kartenmißbrauchs nach einem der Ansprüche 1 bis 5,
**dadurch gekennzeichnet, daß** alle ersten Speicher nach einer vorbestimmten Zeitspanne gelöscht werden.

7. Verfahren zum Erkennen eines Kartenmißbrauchs nach einem der Ansprüche 3 bis 6,
**dadurch gekennzeichnet,**
**daß** mehrere Endgeräte gruppenweise zusammengeschlossen werden und die Inhalte ihrer ersten und/oder zweiten Speicher derart austauschen und verarbeiten können, daß ein Mißbrauch einer Chipkarte oder einer Gruppe von Chipkarten mit der gleichen Identität an den Endgeräten festgestellt werden kann, wenn die Anzahl von Werteinheiten, die mit den Chipkarten gleicher Identität in den Endgeräten verbraucht worden ist, den vorbestimmten maximalen Wert überschreitet.

8. Verfahren zum Erkennen eines Kartenmißbrauchs nach einem der Ansprüche 1 bis 7,
**dadurch gekennzeichnet, daß** unterschiedlichen Chipkarten-Identitäten verschiedene vorbestimmte Maximalwerte zugeordnet werden.

9. Verfahren zum Erkennen eines Kartenmißbrauchs nach einem der Ansprüche 1 bis 8,
**dadurch gekennzeichnet, daß** in dem oder jeden Endgerät ein dritter Speicher vorgesehen ist, in dem die Identität und der Zählerstand der eingesetzten Chipkarte vorübergehend abgelegt werden.

10. Verfahren zum Erkennen eines Kartenmißbrauchs nach einem der Ansprüche 1 bis 9,
**dadurch gekennzeichnet, daß** der Schritt e) oder der Schritt e1) ausgeführt wird, bevor das Endgerät von einem Benutzer benutzt werden kann.

11. Schaltungsanordnung für ein Endgerät zur Durchführung des Verfahrens nach einem der Ansprüche 1 bis 10 mit folgenden Merkmalen:
wenigstens zwei erste Speicher( 10; 11,12, 1m), die je die Identität einer Chipkarte oder einer Gruppe von Chipkarten und die Anzahl der mit diesen Chipkarten verbrauchten Werteinheiten aufnehmen können, wobei die Anzahl (m) der ersten Speicher (10, 11, 12) vorbestimmt und kleiner als die Anzahl der verschiedenen Identitäten der sich im Umlauf befindlichen Chipkarten ist,
ein Zähler (50), der die während einer Nutzung des Endgeräts mit der eingesetzten Chipkarte verbrauchten Werteinheiten zählt,
ein erster Komparator (60), der die Identität (IDa) der eingesetzten Chipkarte mit den Identitäten (ID1, ID2, IDm) vergleichen kann, die in den ersten Speichern (11, 12, 1m) registriert sind,
ein Addierer (90), der die vom Zähler (50) gelieferten Werteinheiten und die in einem ersten Speicher (1m) abgelegte Anzahl von Werteinheiten addieren kann, wenn der erste Komparator (60) eine Übereinstimmung zwischen zwei Identitäten festgestellt hat,
ein zweiter Komparator (110), der den vom Addierer (90) gebildeten Summenwert mit einem vorbestimmten maximalen Wert vergleichen kann.

12. Schaltungsanordnung nach Anspruch 11,
**gekennzeichnet durch** eine Einrichtung (130) zum Anzeigen eines Mißbrauchs einer Chipkarte oder einer Gruppe von Speicherkarten mit gleicher Identität, wenn der vom Addierer (90) gebildete Summenwert größer ist als der vorbestimmte maximale Wert.

13. Schaltungsanordnung nach Anspruch 11 oder 12,
**dadurch gekennzeichnet, daß** wenigstens ein zweiter Speicher (20; 21, 2n) vorgesehen ist, der die Identität und die Anzahl von verbrauchten Werteinheiten einer zufällig ausgewählten Chipkarte speichert und daß der erste Komparator (60) die Identität der eingesetzten Chipkarte mit den Identitäten vergleichen kann, die in den ersten und/oder zweiten Speichern (10, 20) enthalten sind.

14. Schaltungsanordnung nach einem der Ansprüche 11 bis 13,
**dadurch gekennzeichnet, daß** ein dritter Speicher (30) vorgesehen ist, der die Identität und den Zählerstand der in das Endgerät eingesetzten Chipkarte vorübergehend speichert.

15. Schaltungsanordnung nach einem der Ansprüche 11 bis 14, **gekennzeichnet durch** einen vierten Speicher (140), in dem mehrere vorbestimmte maximale Werte abgelegt sind, die jeweils einer unterschiedlichen Chipkarten-Identität zugeordnet sind.

16. Schaltungsanordnung nach einem der Ansprüche 11 bis 15, **gekennzeichnet durch** eine Steuereinrichtung (80), die die Steuerung der Schaltungsanordnung übernimmt und wenigstens einen ersten Speicher (10) nach Ablauf einer vorbestimmten Zeitspanne löscht.

17. Anlage mit wenigstens zwei Endgeräten, die je eine Schaltungsanordnung nach einem der Ansprüche 11 bis 16 aufweisen und die Identitäten und die verbrauchten Werteinheiten, die in den ersten und/oder zweiten Speicher (10, 20) der Endgeräte abgelegt sind, derart austauschen und verarbeiten können, daß der Mißbrauch einer Chipkarte oder einer Gruppe von Chipkarten gleicher Identität feststellbar ist, wenn die Anzahl der Werteinheiten, die mit den Chipkarten gleicher Identität in den Endgeräten insgesamt verbraucht worden ist, einen vorbestimmten maximalen Wert überschreitet.

18. Anlage mit wenigstens zwei Endgeräten nach Anspruch 17, **dadurch gekennzeichnet daß** eine zentrale Einrichtung mit den Endgeräten verbunden und zum Erkennen des Mißbrauchs einer Chipkarte oder einer Gruppe von Chipkarten ausgebildet ist.

## Claims

1. Method for detecting misuse of non-reloadable chipcards in at least one terminal device containing at least two first memories (10, 11, 12), said first memories (10, 11, 12) each being capable of storing the identity (ID) of a chipcard or group of chipcards, the number (m) of first memories (10, 11, 12) being predetermined and smaller than the number of different identities of chipcards in circulation, and the number (A) of value units consumed with those chipcards, comprising the following steps:
a) insertion of a chipcard into the terminal device, said terminal device being capable of interrogating the identity (IDa) and counter status of the inserted chipcard;
b) determination of whether the identity (IDa) of the inserted chipcard has already been stored in one of the first memories (11, 12);
c) counting of the value units consumed during the use of the terminal device;
d) if the identity (IDa) of the inserted chipcard has not been registered in any of the first memories (11, 12), the identity and the value units counted in step c) are loaded into one of the first memories if at least one first memory has not been written to, or if the number of value units counted in step c) is greater than the smallest number of consumed value units contained in one of the first memories;
e) if the identity of the inserted chipcard has been registered in one of the first memories, the number of consumed value units stored in that memory and the value units counted in step c) are added, and this cumulative value is compared with a predetermined maximum value; and
f) misuse of a chipcard or group of chipcards with the same identity is indicated if the number of value units determined in c) or the cumulative value formed in e) exceeds the predetermined maximum value.

2. Method for detecting card misuse according to claim 1,
**characterized in that** step d) is replaced by step d'):
d') the identity of the inserted chipcard and the value units counted in step c) are written to the first memory (1m) containing the smallest number of consumed value units, and the card identities stored in the first memories (10, 11, 12... 1m) and the corresponding consumed value units are rearranged in descending order with respect to the number of consumed value units.

3. Method for detecting card misuse according to claim 1,
**characterized in that**
each terminal device has at least one second memory (20, 21...2n), the number (m) of first memories (10, 11, 12) and the number (n) of second memories (20, 21...2n) being predetermined and together being smaller than the number of different identities of chipcards in circulation;
step b) is replaced by the steps
b1) determination of whether the identity of the inserted chipcard is contained in one of the first or second memories (10, 20);
b2) determination of whether all the first memories (11...1m) have been written to;
step d) is replaced by the step
dl) if the identity of the inserted chipcard is not contained in any of the first or second memories, all the first memories are written to and if the number of consumed value units counted in step c) is smaller than or equal to the smallest number of consumed value units stored in one of the first memories, it is randomly determined whether the identity and the counted value units of the inserted chipcard are to be written to the second memory (20); and
step e) is replaced by the step
e1) if the identity of the inserted chipcard is contained in one of the first or second memories, the number of consumed value units stored **in that** memory are added, and this cumulative value is compared with the predetermined maximum value.

4. Method for detecting card misuse according to claim 3,
**characterized in that** step e1) is followed by step e2):
e2) the identity of a chipcard or group of chipcards and the number of value units consumed with those chipcards which have been registered in one of the second memories are written to one of the first memories if the cumulative value formed in step e1) is greater than the smallest number of consumed value units stored in one of the first memories.

5. Method for detecting card misuse according to any one of claims 1 to 4,
**characterized in that**
the card identity and the number of value units consumed with that chipcard which are stored in one of the first memories are erased if the number of consumed value units has not been changed during a predetermined time span.

6. Method for detecting card misuse according to any one of claims 1 to 5,
**characterized in that** all the first memories are erased after a predetermined time span.

7. Method for detecting card misuse according to any one of claims 3 to 6,
**characterized in that**
a plurality of terminal devices are grouped together and are capable of exchanging and processing the contents of their first and/or second memories in such a manner that the misuse of a chipcard or group of chipcards with the same identity can be detected on the terminal devices if the number of value units which has been consumed in the terminal devices with the chipcards of the same identity exceeds the predetermined maximum value.

8. Method for detecting card misuse according to any one of claims 1 to 7,
**characterized in that** different chipcard identities are associated with different predetermined maximum values.

9. Method for detecting card misuse according to any one of claims 1 to 8,
**characterized in that** the or each terminal device is provided with a third memory in which are temporarily stored the identity and counter status of the inserted chipcard.

10. Method for detecting card misuse according to any one of claims 1 to 9,
**characterized in that** step e) or step e1)is executed before the terminal device can be used by a user.

11. Circuit arrangement for a terminal device for implementing the method according to any one of claims 1 to 10 with the following features:
at least two first memories (10; 11, 12, 1m) each capable of recording the identity of a chipcard or group of chipcards and the number of value units consumed with those chipcards, the number (m) of first memories (10, 11, 12) being predetermined and smaller than the number of different identities of chipcards in circulation;
a counter (50) which counts the value units consumed during use of the terminal device with the inserted chipcard;
a first comparator (60) capable of comparing the identity (IDa) of the inserted chipcard with the identities (ID1, ID2, IDm) which have been registered in the first memories (11, 12, 1m);
an adder (90) capable of adding the value units supplied from the counter (50) and the number of value units stored in a first memory (1m) if the first comparator (60) has determined that two identities are the same;
a second comparator (110) capable of comparing the cumulative value formed by the adder (90) with a predetermined maximum value.

12. Circuit arrangement according to claim 11,
**characterized by** a means (130) for indicating misuse of a chipcard or group of memory cards of the same identity if the cumulative value formed by the adder (90) is greater than the predetermined maximum value.

13. Circuit arrangement according to claim 11 or 12,
**characterized in that** at least one second memory (20; 21, 2n) is provided, said second memory (20; 21, 2n) storing the identity and the number of consumed value units of a randomly selected chipcard, wherein the first comparator (60) is capable of comparing the identity of the inserted chipcard with the identities contained in the first and/or second memories (10, 20).

14. Circuit arrangement according to any one of claims 11 to 13,
**characterized in that** a third memory (30) is provided, said third memory (30) temporarily storing the identity and counter status of the chipcard which has been inserted into the terminal device.

15. Circuit arrangement according to any one of claims 11 to 14,
**characterized by** a fourth memory (140), said fourth memory (140) containing a plurality of predetermined maximum values each associated with a different chipcard identity.

16. Circuit arrangement according to any one of claims 11 to 15,
**characterized by** a control means (80), said control means (80) controlling the circuit arrangement and erasing at least one first memory (10) after the end of a predetermined time span.

17. System with at least two terminal devices each comprising a circuit arrangement according to any one of claims 11 to 16 and being capable of exchanging and processing the identities and consumed value units stored in the first and/or second memories (10, 20) of the terminal devices in such a manner that misuse of a chipcard or group of chipcards of the same identity can be detected if the number of value units which has been consumed in total in the terminal devices with the chipcards of the same identity exceeds a predetermined maximum value.

18. System with at least two terminal devices according to claim 17,
**characterized in that** a central means is connected to the terminal devices and is formed for detecting misuse of a chipcard or group of chipcards.

## Revendications

1. Procédé pour la détection d'un usage frauduleux de cartes à puce non rechargeables dans au moins un terminal comportant au moins deux premières mémoires (10, 11, 12), chacune pouvant mémoriser l'identité (ID) d'une carte à puce ou d'un groupe de cartes à puce, le nombre (m) de premières mémoires (10, 11, 12) étant prédéfini et inférieur au nombre d'identités différentes des cartes à puce se trouvant en circulation, et le nombre (A) d'unités de valeur consommées avec ces cartes à puce, avec les étapes suivantes :
a) Insertion d'une carte à puce dans le terminal, lequel peut interroger l'identité (IDa) et la position du compteur de la carte à puce insérée,
b) Déterminer si l'identité (IDa) de la carte à puce insérée a déjà été mémorisée dans l'une des premières mémoires (11, 12),
c) Comptage des unités de valeur consommées pendant l'utilisation du terminal,
d) Si l'identité (IDa) de la carte à puce insérée n'est enregistrée dans aucune des premières mémoires (11, 12), l'identité et les unités de valeur comptées à la première étape c) sont chargées dans l'une des premières mémoires si au moins une première mémoire est vierge ou bien si le nombre d'unités de valeur comptées à l'étape c) est supérieur au plus petit nombre d'unités de valeur consommées contenues dans l'une des premières mémoires,
e) Si l'identité de la carte à puce insérée est enregistrée dans l'une des premières mémoires, le nombre d'unités de valeur consommées mémorisées dans cette mémoire et les unités de valeur comptées à l'étape c) sont additionnées et ce total est comparé à une valeur maximale prédéfinie et
f) un usage frauduleux d'une carte à puce ou d'un groupe de cartes à puce ayant la même identité est affiché si le nombre d'unités de valeur déterminé à l'étape c) ou le total obtenu à l'étape e) dépasse la valeur maximale prédéfinie.

2. Procédé pour la détection d'un usage frauduleux selon revendication 1,
**caractérisé en ce que** l'étape d) est remplacée par l'étape d') :
d') L'identité de la carte à puce insérée et les unités de valeur comptées à l'étape c) sont écrites dans la première mémoire (1m) qui contient le plus petit nombre d'unités de valeur consommées et les identités de carte mémorisées dans les premières mémoires (10, 11, 12, ... 1m) et les unités de valeur consommées correspondantes sont reclassées par ordre décroissant par rapport au nombre d'unités de valeur consommées.

3. Procédé pour la détection d'un usage frauduleux de cartes selon revendication 1,
**caractérisé en ce que**
dans chaque terminal, il y a au moins une deuxième mémoire (20, 21, 2n), le nombre (m) de premières mémoires (10, 11, 12) et le nombre (n) de deuxièmes mémoires (20, 21, ... 2n) étant prédéfini et étant ensemble plus petits que le nombre d'identités différentes des cartes à puce se trouvant en circulation,
**en ce que** l'étape b) est remplacée par les étapes
b1) déterminer si l'identité de la carte à puce insérée est présente dans une des premières ou deuxièmes mémoires (10, 20),
b2) déterminer si toutes les premières mémoires (11 ... 1m) sont écrites,
**en ce que** l'étape d) est remplacée par l'étape
d1) Si l'identité de la carte à puce insérée n'est contenue dans aucune des premières ou deuxièmes mémoires, toutes les premières mémoires sont écrites et si le nombre d'unités de valeur consommées comptées à l'étape c) est inférieur ou égal au plus petit nombre d'unités de valeur consommées enregistrées dans l'une des premières mémoires, on détermine de façon aléatoire si l'identité et les unités de valeur comptées de la carte à puce insérée doivent être écrites dans la deuxième mémoire (20) et
**en ce que** l'étape e) est remplacée par l'étape
e1)Si l'identité de la carte à puce insérée est contenue dans une des premières ou deuxièmes mémoires, le nombre d'unités de valeur consommées mémorisé dans cette mémoire est additionné et ce total est comparé à la valeur maximale prédéfinie.

4. Procédé pour la détection d'un usage frauduleux de cartes selon revendication 3,
**caractérisé en ce que** l'étape e1) est suivie de l'étape e2) :
e2) L'identité d'une carte à puce ou d'un groupe de cartes à puce et le nombre d'unités de valeur consommées avec ces cartes à puce et enregistrées dans l'une des deuxièmes mémoires sont écrites dans l'une des premières mémoires si le total obtenu à l'étape e1) est supérieur au plus petit nombre d'unités de valeur consommées mémorisées dans l'une des premières mémoires.

5. Procédé pour la détection d'un usage frauduleux de cartes selon l'une quelconque des revendications 1 à 4,
**caractérisé en ce que**
l'identité de la carte et le nombre d'unités de valeur consommées avec cette carte à puce, mémorisées dans l'une des premières mémoires, sont supprimés si le nombre d'unités de valeur consommées n'a pas été modifié dans les limites d'un laps de temps prédéfini.

6. Procédé pour la détection d'un usage frauduleux de cartes selon l'une quelconque des revendications 1 à 5,
**caractérisé en ce que** toutes les premières mémoires sont supprimées au bout d'un laps de temps prédéfini.

7. Procédé pour la détection d'un usage frauduleux de cartes selon l'une quelconque des revendications 3 à 6,
**caractérisé en ce que**
plusieurs terminaux sont reliés en groupes et peuvent échanger et traiter les contenus de leurs premières et/ou deuxièmes mémoires, **en ce qu'**un usage frauduleux d'une carte à puce ou d'un groupe de cartes à puce ayant la même identité peut être constaté sur les terminaux si le nombre d'unités de valeur ayant été consommées dans les terminaux avec les cartes à puce de même identité dépasse la valeur maximale prédéfinie.

8. Procédé pour la détection d'un usage frauduleux de cartes selon l'une quelconque des revendications 1 à 7,
**caractérisé en ce que** des valeurs maximales prédéfinies différentes sont affectées à des identités différentes de cartes à puce.

9. Procédé pour la détection d'un usage frauduleux de cartes selon l'une quelconque des revendications 1 à 8,
**caractérisé en ce que**, dans le ou chaque terminal, on prévoit une troisième mémoire dans laquelle l'identité et la position du compteur de la carte à puce insérée sont enregistrés temporairement.

10. Procédé pour la détection d'un usage frauduleux de cartes selon l'une quelconque des revendications 1 à 9,
**caractérisé en ce que** l'étape e) ou l'étape e1) est exécutée avant que le terminal ne puisse être utilisé par un utilisateur.

11. Circuit de commutation pour un terminal destiné à la réalisation du procédé selon l'une quelconque des revendications 1 à 10 avec les caractéristiques suivantes :
Au moins deux premières mémoires (10; 11, 12, 1m) dont chacune peut enregistrer l'identité d'une carte à puce ou d'un groupe de cartes à puce et le nombre d'unités de valeur consommées avec ces cartes à puce, le nombre (m) de premières mémoires (10, 11, 12) étant prédéfini est inférieur au nombre d'identités différentes des cartes à puce se trouvant en circulation,
un compteur (50) qui compte les unités de valeur consommées avec la carte à puce insérée pendant l'utilisation du terminal,
un premier comparateur (60) qui peut comparer l'identité (IDa) de la carte à puce insérée avec les identités (ID1, ID2, IDm) enregistrées dans les premières mémoires (11, 12, 1m),
un additionneur (90) pouvant additionner les unités de valeur fournies par le compteur (50) et le nombre d'unités de valeur mémorisées dans une première mémoire (1m), lorsque le premier comparateur (60) a constaté une concordance entre deux identités,
un deuxième comparateur (110) pouvant comparer le total obtenu par l'additionneur (90) avec une valeur maximale prédéfinie.

12. Circuit de commutation selon revendication 11,
**caractérisé par** un dispositif (130) destiné à l'affichage d'un usage frauduleux d'une carte à puce ou d'un groupe de cartes à mémoire de même identité lorsque le total obtenu par l'additionneur (90) est supérieur à la valeur maximale prédéfinie.

13. Circuit de commutation selon revendication 11 ou 12,
**caractérisé en ce qu'**au moins une deuxième mémoire (20; 21, 2n) est prévue laquelle enregistre l'identité et le nombre d'unités de valeur consommées d'une carte à puce sélectionnée de façon aléatoire et **en ce que** le premier comparateur (60) peut comparer l'identité de la carte à puce insérée avec les identités contenues dans les premières et/ou deuxièmes mémoires (10, 20).

14. Circuit de commutation selon l'une quelconque des revendications 11 à 13, **caractérisé en ce qu'**une troisième mémoire (30) est prévue, cette mémoire enregistrant temporairement l'identité et la position du compteur de la carte à puce insérée dans le terminal.

15. Circuit de commutation selon l'une quelconque des revendications 11 à 14, **caractérisé par** une quatrième mémoire (140) dans laquelle plusieurs valeurs maximales prédéfinies sont enregistrées dont chacune est affectée à une identité différente de carte à puce.

16. Circuit de commutation selon l'une quelconque des revendications 11 à 15, **caractérisé par** un dispositif de commande (80) qui prend en charge la commande du circuit de commutation et supprime au moins une première mémoire (10) à l'issue d'un laps de temps prédéfini.

17. Installation comportant au moins deux terminaux dont chacun présente un circuit de commutation selon l'une quelconque des revendications 11 à 16 et peuvent échanger et traiter des identités et les unités de valeur mémorisées enregistrées dans la première et/ou deuxième mémoire (10, 20) des terminaux de telle façon que l'usage frauduleux d'une carte à puce ou d'un groupe de cartes à puce de même identité peut être constaté si le nombre d'unités de valeur ayant été consommées avec les cartes à puce de même identité dans les terminaux dépasse une valeur maximale prédéfinie.

18. Installation comportant au moins deux terminaux selon revendication 17, **caractérisée en ce qu'**un dispositif central est relié aux terminaux et est configuré pour détecter l'usage frauduleux d'une carte à puce ou d'un groupe de cartes à puce.
